# EUROPÄISCHE PATENTANMELDUNG

(11) **EP 1 881 386 A1**
(43) Veröffentlichungstag der Anmeldung: **23.01.2008**
(21) Anmeldenummer: 06015048.9
(22) Anmeldetag: 19.07.2006
(51) Int. Cl.: G05B 21/02, G05B 19/02

(54) **Verfahren und Vorrichtung zur Überwachung der Emissionssituation an einer Anlage**

(71) Anmelder: SIEMENS AKTIENGESELLSCHAFT, 80333 München (DE)
(72) Erfinder: Kochenburger, Andreas, 76863 Herxheim (DE)

(57) **Zusammenfassung**

Ein Verfahren und eine Vorrichtung zur Überwachung der Emissionssituation an einer Emissionen ausstoßenden Anlage umfassen ein Ermitteln (18) mindestens eines aktuellen Emissionswertes der Anlage, ein Hochrechnen (24) auf einen voraussichtlichen Emissionswert auf der Grundlage des mindestens einen ermittelten Emissionswertes, ein Vergleichen (24) des voraussichtlichen Emissionswertes mit einem zugeordneten E-missionsrecht und ein Auswerten (28) des Vergleichs als Grundlage zum weiteren Regeln der Anlage.

## Beschreibung

Die Erfindung betrifft ein Verfahren und eine Vorrichtung zur Überwachung der Emissionssituation an einer Emissionen ausstoßenden Anlage, insbesondere einem Kraftwerk.

Gemäß der Gesetzgebung der Europäischen Union zum Handel mit Treibhausgas-Emissionsrechten sind ab dem Jahr 2005 alle Betreiber von Anlagen, welche Treibhausgase (insbesondere Kohlendioxid (CO₂)) ausstoßen, dazu verpflichtet, a) ihre Anlagen anzumelden und Emissionsrechte (Zertifikate) zu beantragen, b) ihre Emissionswerte zu erfassen und jährlich zu berichten, sowie c) für die ermittelten Treibhausgasmengen eine entsprechende Menge an Zertifikaten abzugeben.

Bei zuviel ausgestoßenem bzw. emittiertem Treibhausgas hat der Betreiber das Recht auf dem freien Markt Zertifikate nachzuerwerben, oder er muss mit hohen Strafen und Konsequenzen für den Weiterbetrieb der Anlage rechnen. Ein Überschuss an Zertifikaten kann frei verkauft werden.

Aufgrund der hochvolatilen Marktpreise für Zertifikate, beinhaltet die Emission von Treibhausgasen und der zugehörige Zertifikathandel ein hohes unternehmerisches Risiko. So kann es beispielsweise auch zu einer ungewollten Korrektur bzw. Neuzuteilung von Zertifikaten kommen, wenn ein Betreiber seine angemeldeten Produktionsmengen an Treibhausgas unterschreitet (so genannte Ex-Post-Korrektur). Effektiv bedeutet diese einen Verlust an Emissionsrechten für die Zukunft, der die zukünftigen Kosten für das Betreiben einer Anlage erheblich erhöhen könnte.

Es sind so genannte Compliance Management Software-Systeme bekannt, welche der Unterstützung der Emissionsberichterstattung und der Zertifikat-Portfolio-Verwaltung dienen. Durch Eingabe von Szenariodaten unterstützen diese Systeme auch die Bewertung von Produktions- und Handels-Optionen.

Gegenüber diesen bekannten Systemen ist es eine Aufgabe der Erfindung ein Verfahren und eine Vorrichtung anzugeben, mittels denen notwendige Steuerungs- und Regelungseingriffe an der zugehörigen Anlage unmittelbar erkannt werden können. Die Erfindung soll zu einer Personalentlastung und ggf. Einsparung für das Compliance Management führen.

Die Aufgabe ist gemäß der Erfindung mit einem Verfahren gemäß Anspruch 1 und einer Vorrichtung gemäß Anspruch 8 gelöst. Vorteilhafte Weiterbildungen der Erfindung sind in den abhängigen Ansprüchen definiert.

Gemäß der Erfindung ist ein Verfahren zur Überwachung der Emissionssituation an einer Emissionen ausstoßenden Anlage geschaffen, welches die folgenden Schritte umfasst: Ermitteln mindestens eines aktuellen Emissionswertes der Anlage, Hochrechnen auf einen voraussichtlichen Emissionswert auf der Grundlage des mindestens einen ermittelten Emissionswertes, Vergleichen des voraussichtlichen Emissionswertes mit einem zugeordneten Emissionsrecht und Auswerten des Vergleichs als Grundlage zum weiteren Regeln der Anlage.

Bevorzugt ist ferner eine Frühwarnung vorgesehen, welche eine zu erwartende Unterdeckung mit Emissionsrechten unter einen vordefinierten Schwellenwert anzeigt. Alternativ oder zusätzlich wird mittels einer Frühwarnung eine zu erwartende Überdeckung mit Emissionsrechten über einen vordefinierten Schwellenwert angezeigt.

Diese Frühwarnungen werden vorteilhaft mittels einer Ampelschaltung angezeigt. Wobei insbesondere für mehrere Anlagen gleichzeitig ein guter Gesamtüberblick mittels mehrerer nebeneinander angeordneter Ampeln geschaffen werden kann. Die Farbe rot sollte dabei zum Anzeigen einer Unterdeckung mit Emissionsrechten dienen.

Die Frühwarnung soll bevorzugt automatisch über eine drahtlose Fernübermittelung übertragen und zur Anzeige gebracht werden. Bevorzugt werden dabei bewährte Standards von E-Mail (Electronic Mail)und/oder SMS (Short Message Service) verwendet.

Die Frühwarnung sollte ferner eine Anzeige des Verlaufs des mindestens einen aktuellen Emissionswertes und/oder eine Anzeige des Verlaufs des voraussichtlichen Emissionswertes und/oder eine Anzeige des Verlaufs des zugeordneten Emissionsrechtes umfassen.

Es ist erfindungsgemäß auch bevorzugt, dass die Frühwarnung eine Anzeige weiterer technischer Daten der zu überwachenden Anlage, insbesondere eine Anzeige der mit der Anlage erzeugten Energiemenge umfasst.

Die erfindungsgemäße Lösung ist ferner mit einer Vorrichtung zum Überwachen der Emissionssituation an einer Emissionen ausstoßenden Anlage gelöst, welche eine Ermittlungseinrichtung zum Ermitteln mindestens eines aktuellen Emissionswertes der Anlage, eine Recheneinrichtung zum Hochrechnen auf einen voraussichtlichen Emissionswert auf der Grundlage des mindestens einen ermittelten Emissionswertes, eine Vergleichseinrichtung zum Vergleichen des voraussichtlichen Emissionswertes mit einem zugeordneten Emissionsrecht und eine Auswerteeinrichtung zum Auswerten des Vergleichs als Grundlage zum weiteren Regeln der Anlage umfasst.

Die Vorrichtung umfasst ferner bevorzugt eine Frühwarneinrichtung zum Erzeugen einer Frühwarnung, welche eine zu erwartende Unterdeckung mit Emissionsrechten unter einen vordefinierten Schwellenwert anzeigt.

Alternativ oder zusätzlich ist eine Frühwarneinrichtung zum Erzeugen einer Frühwarnung vorgesehen, welche eine zu erwartende Überdeckung mit Emissionsrechten über einen vordefinierten Schwellenwert anzeigt.

Ferner ist vorteilhaft eine Ampeleinrichtung zum Anzeigen der Frühwarnung vorgesehen.

Die Frühwarnung wird wie erwähnt bevorzugt automatisch und drahtlos übermittelt.

Bei der erfindungsgemäßen Vorrichtung ist ferner bevorzugt eine Anzeige vorgesehen, bei der außer der Frühwarnung auch der Verlauf des mindestens einen aktuellen Emissionswertes und/oder der Verlauf des voraussichtlichen Emissionswertes und/oder der Verlauf des zugeordneten Emissionsrechtes angezeigt werden können.

Ferner wird eine Anzeige bevorzugt, bei der außer der Frühwarnung weitere technische Daten der zu überwachenden Anlage, insbesondere die mit der Anlage erzeugte Energiemenge angezeigt werden können.

Auf diese Weise wird erfindungsgemäß eine integrierte, holistische Darstellung der Emissionssituation insbesondere zusammen mit Produktionsdaten geschaffen, welche für die Situation im Hinblick auf das Treibhausgas-Emissionsgesetz zwar nicht unmittelbar, letztendlich aber doch sehr wohl von Bedeutung sind. So werden erfindungsgemäß insbesondere gesetzesrelevante Daten der Staub-, Schwermetallfracht oder eine Flusswassererwärmung zusammen mit Daten der Instandhaltungsplanung, der Revisionsplanung oder der Fernwärmeerzeugung angezeigt. Instandhaltungen und Revisionen können dann unter Nutzung der Auswertung der Emissionswerte besser geplant und in den Gesamtbetrieb der Anlage integriert werden. Um diese Art der Gesamtanlagensteuerung zu erzielen, werden unterschiedlichste Darstellungsformen, insbesondere farbige Kurven der Verläufe, sowie Berechnungsfolgen verwendet, welche sich an nationalen und internationalen Standards orientieren.

Die erfindungsgemäßen Lösungen erlauben mit der geschaffenen Indikation und Frühwarnung in Echtzeit eine schnelle unternehmerische Entscheidung, insbesondere einen rechtzeitigen Kauf sowie eine rechtzeitige Umschichtung von Zertifikaten bei noch günstigen Kursen. Darüber hinaus ist eine schnelle, vorurteilslose Verteilung der relevanten Informationen an alle Bediener einer Anlage und beteiligte Mitarbeiter möglich. Die erfindungsgemäße Art der Auswertung und Anzeige von relevanten Daten bedeutet damit eine Zeitersparnis gegenüber konventionellen Systemen.

Nachfolgend wird ein Ausführungsbeispiel eines erfindungsgemäßen Verfahrens zur Überwachung der Emissionssituation an einer Emissionen ausstoßenden Anlage sowie einer zugehörigen erfindungsgemäßen Vorrichtung anhand der beigefügten schematischen Zeichnungen näher erläutert. Es zeigt:
Fig. 1 eine stark schematische Darstellung eines ersten Ausführungsbeispiels einer Vorrichtung gemäß der Erfindung,
Fig. 2 eine Bildschirmansicht eines Programms zum Abarbeiten des erfindungsgemäßen Verfahrens bei einer Anlage gemäß Fig. 1,
Fig. 3 eine weitere Bildschirmansicht des oben genannten Programms,
Fig. 4 eine weitere Bildschirmansicht des oben genannten Programms bei einem zweiten Ausführungsbeispiel einer Vorrichtung gemäß der Erfindung.

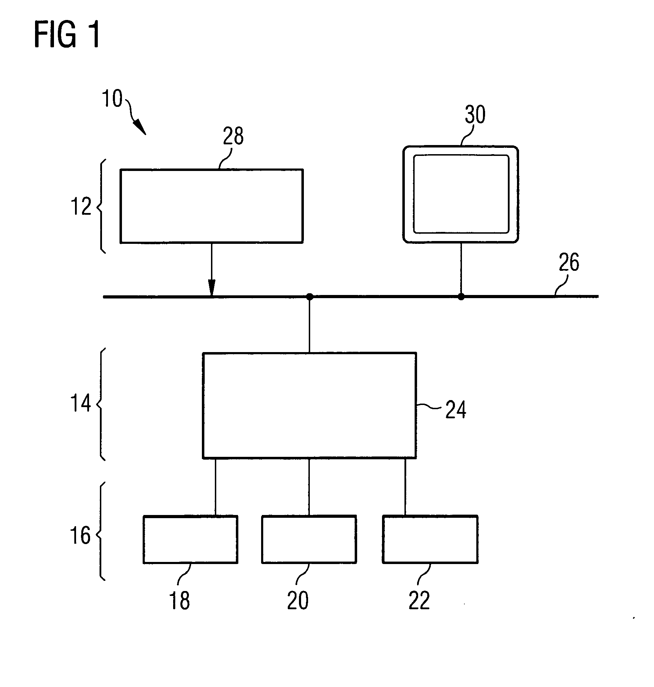

In Fig. 1 sind die wesentlichen Komponenten einer Vorrichtung 10 zur Überwachung der Emissionssituation an einer Emissionen ausstoßenden Anlage dargestellt. Diese sind in drei hierarchische Ebenen 12, 14, 16 gegliedert, wobei die unterste Ebene 16 unterlagerte Systeme der Brennstoffdaten-Ermittlung 18, der Aktivitätsdaten-Ermittlung 20 sowie der Speicherung 22 von Bestandsdaten an Zertifikaten umfasst. Die gesammelten Daten stammen dabei aus einer oder mehreren überwachten Anlagen oder aus Drittsystemen.

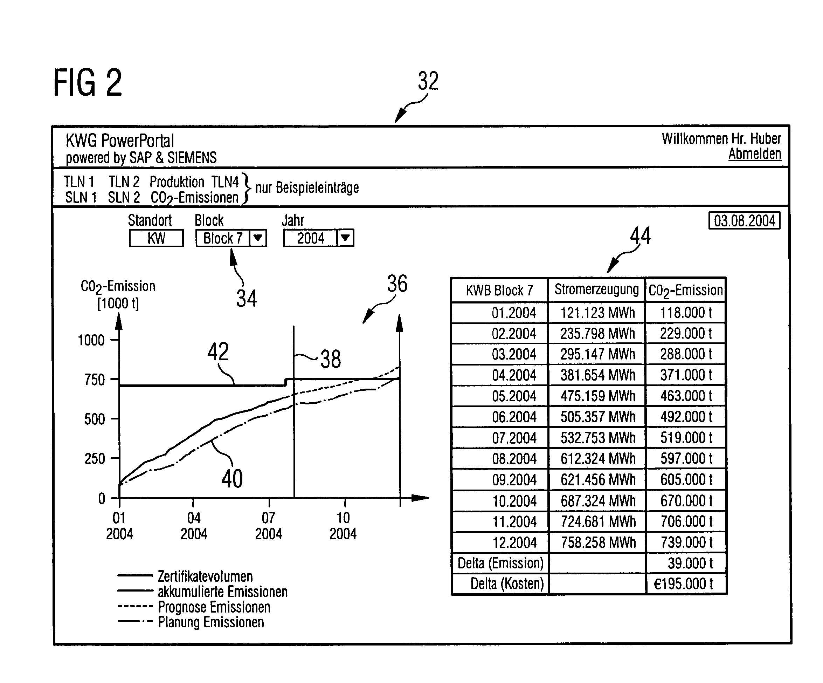

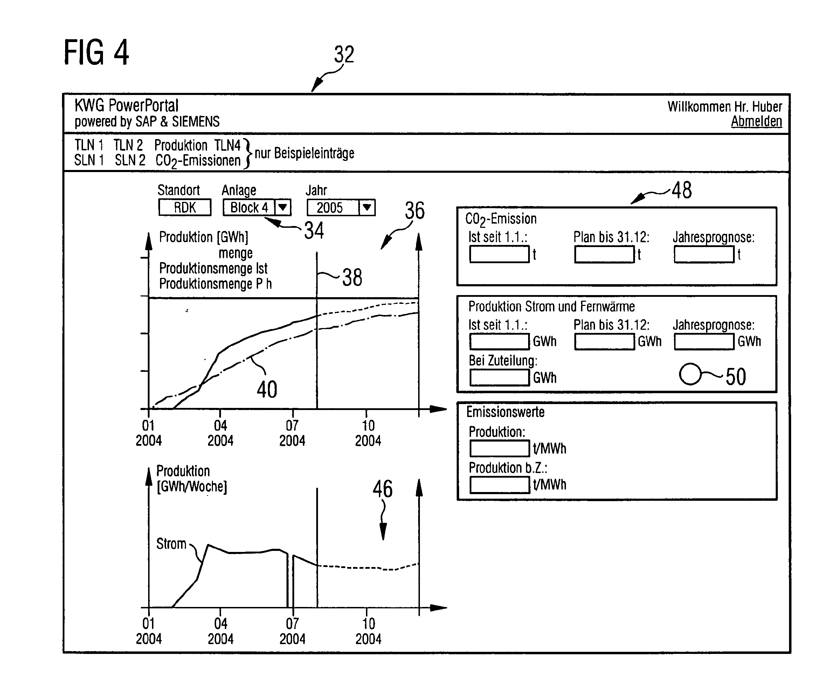

Daten aus dieser Ebene 16 werden in der Ebene 14 in einem Cockpit-Server 24 weiterverarbeitet, wobei insbesondere eine Signalvorverarbeitung, eine Emissionsberechnung, eine Zeitreihenverknüpfung und eine Berichterstattung (Reporting) erzeugt werden. Der Cockpit-Server 24 ist über eine Unternehmens-Datenleitung 26 bzw. einen Datenbus (local area network (LAN)) mit einem Portal-Server 28 verbunden, der insbesondere eine Visualisierung, ein Messaging (Berichte-Erstellung und - Anzeige) sowie eine Rechteverwaltung in einer Rechnereinheit umfasst, mit der ein Bildschirm 30 betrieblich gekoppelt ist. Auf diesem Bildschirm werden Anzeigen erzeugt, wie sie in den Fig. 2 bis 4 dargstellt sind.

Diese Anzeigen umfassen je eine Navigationsleiste 32, deren Inhalt abhängig von den Zugriffsrechten des angemeldeten Nutzers (vorliegend ein Hr. Huber) ist. Unter der Navigationsleiste 32 sind Auswahlboxen 34 für Anlage und Jahr (historisch, aktuell und zukünftig möglich).

Ein sich im linken Bereich der Anzeige gemäß Fig. 2 befindendes Diagramm 36 enthält eine Darstellung der Emissionssituation an der zugehörigen Anlage. Es hat eine vertikale Linie 38; links von dieser Linie 38 sind echte historische Daten als Kurve 40 zu sehen, wohingegen rechts von der Linie 38 Planungsdaten bzw. aus einer Verbrauchsplanung errechnete E-missionsverläufe als Weiterführung der Kurve 40 dargestellt sind. Eine sich über der Kurve 40 befindende waagrechte gestufte Linie 42 zeigt den Zertifikatsbestand im Unternehmen. Die Stufe bedeutet, dass Zertifikate nachgekauft oder innerhalb des Unternehmens umgeschichtet wurden.

In einer Tabelle 44 sind rechts neben dem Diagramm 36 Zahlenwerte je Monat sowie eine voraussichtliche Gesamtunterdeckung zum 31. Dezember des Jahres dargestellt.

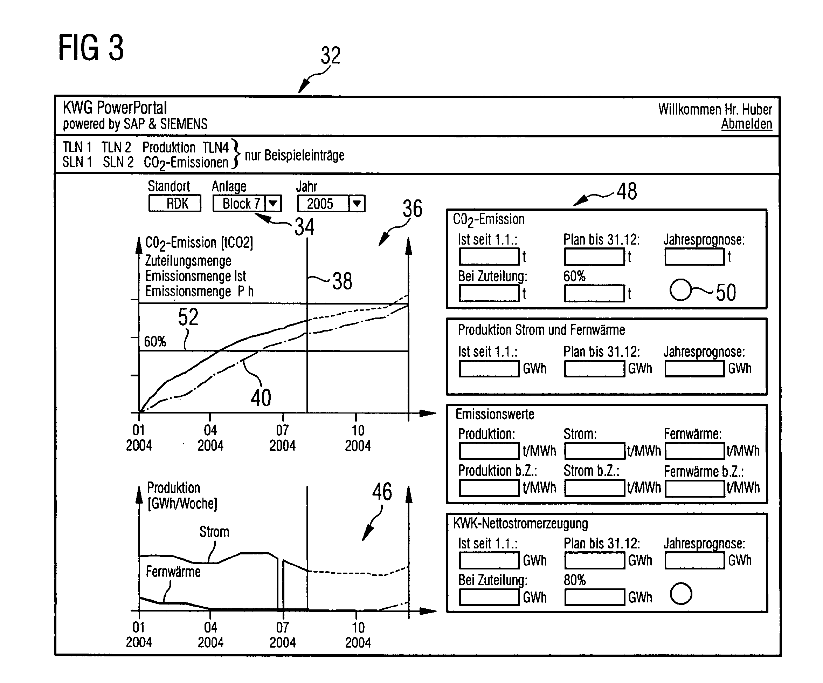

Fig. 3 zeigt eine Bildschirmansicht, bei der unter einem Diagramm 36, welches inhaltlich jenem der Fig. 2 entspricht, ferner eine zugehörige Strom- und Fernwärmeerzeugung als Diagramm 46 dargestellt ist. Anstelle oder unter diesem Diagramm 46 können auch andere technische Daten der zugehörigen Anlage angezeigt werden, welche nicht Treibhausgase betreffen, z.B. andere Umweltbelastungen. Rechts neben den Diagrammen 36 und 46 sind mehrere Anzeigeboxen 48 darstellt, welche teilweise Ampelanzeigen 50 umfassen. Die Art und der Umfang dieser Anzeigeboxen 48 ist abhängig von den für die relevante Anlage gültigen Zuteilungsregeln. So ist insbesondere gemäß dem deutschen Zuteilungsgesetz für Zertifikate eine Unterscheidung zwischen angemeldeten und historischen Emissionen bei Altanlagen vorgesehen. Sonderregeln gelten für Kraft-Wärme-Kopplung. Auch die Algorithmen der Ampelanzeigen 50 variieren je nach Anlage, insbesondere um drohende Ex-Post-Korrekturen zu melden. Zur Vorbeugung gegen derartige Korrekturen ist im Diagramm 36 ferner eine 60%-Linie 52 eingeblendet, denn bei einer Jahresemission von unter 60% der angemeldeten Emission werden für die Folgejahre weniger Emissionsrechte zugeteilt.

Fig. 3 zeigt ein hinsichtlich der Anzeigeboxen 48 vereinfachtes Bildschirmbild, wie es für eine reine Stromerzeugungsanlage ohne Fernwärme vorgesehen ist.

## Patentansprüche

1. Verfahren zur Überwachung der Emissionssituation an einer Emissionen ausstoßenden Anlage, mit den Schritten:
- Ermitteln (18) mindestens eines aktuellen Emissionswertes der Anlage,
- Hochrechnen (24) auf einen voraussichtlichen Emissionswert auf der Grundlage des mindestens einen ermittelten Emissionswertes,
- Vergleichen (24) des voraussichtlichen Emissionswertes mit einem zugeordneten Emissionsrecht und
- Auswerten (28) des Vergleichs als Grundlage zum weiteren Regeln der Anlage.

2. Verfahren nach Anspruch 1, bei dem eine Frühwarnung erzeugt (40, 42; 50) wird, welche eine zu erwartende Unterdeckung mit Emissionsrechten unter einen vordefinierten Schwellenwert anzeigt.

3. Verfahren nach Anspruch 1 oder 2, bei dem eine Frühwarnung (40, 52; 50) erzeugt wird, welche eine zu erwartende Überdeckung mit Emissionsrechten über einen vordefinierten Schwellenwert anzeigt.

4. Verfahren nach Anspruch 2 oder 3, bei dem die Frühwarnung mittels einer Ampelschaltung (50) angezeigt wird.

5. Verfahren nach einem der Ansprüche 2 bis 4, bei dem die Frühwarnung automatisch über eine drahtlose Fernübermittelung übertragen und zur Anzeige gebracht wird.

6. Verfahren nach einem der Ansprüche 2 bis 5, bei dem die Frühwarnung eine Anzeige des Verlaufs (40) des mindestens einen aktuellen Emissionswertes und/oder eine Anzeige des Verlaufs des voraussichtlichen Emissionswertes (40) und/oder eine Anzeige des Verlaufs des zugeordneten Emissionsrechtes (42) umfasst.

7. Verfahren nach einem der Ansprüche 2 bis 6, bei dem die Frühwarnung eine Anzeige weiterer technischer Daten (46; 48) der zu überwachenden Anlage, insbesondere eine Anzeige der mit der Anlage erzeugten Energiemenge umfasst.

8. Vorrichtung zum Überwachen der Emissionssituation an einer Emissionen ausstoßenden Anlage, mit:
- einer Ermittlungseinrichtung (18) zum Ermitteln mindestens eines aktuellen Emissionswertes der Anlage,
- einer Recheneinrichtung (24) zum Hochrechnen auf einen voraussichtlichen Emissionswert auf der Grundlage des mindestens einen ermittelten Emissionswertes,
- einer Vergleichseinrichtung (24) zum Vergleichen des voraussichtlichen Emissionswertes mit einem zugeordneten Emissionsrecht und
- einer Auswerteeinrichtung (28) zum Auswerten des Vergleichs als Grundlage zum weiteren Regeln der Anlage.

9. Vorrichtung nach Anspruch 8, mit einer Frühwarneinrichtung (40, 42; 50) zum Erzeugen einer Frühwarnung, welche eine zu erwartende Unterdeckung mit Emissionsrechten unter einen vordefinierten Schwellenwert anzeigt.

10. Vorrichtung nach Anspruch 8 oder 9, mit einer Frühwarneinrichtung (40, 52; 50) zum Erzeugen einer Frühwarnung, welche eine zu erwartende Überdeckung mit Emissionsrechten über einen vordefinierten Schwellenwert anzeigt.

11. Vorrichtung nach Anspruch 9 oder 10, mit einer Ampeleinrichtung (50) zum Anzeigen der Frühwarnung.

12. Vorrichtung nach einem der Ansprüche 9 bis 11, mit einer automatischen und drahtlosen Fernübermittelung der Frühwarnung.

13. Vorrichtung nach einem der Ansprüche 9 bis 12, mit einer Anzeige, bei der außer der Frühwarnung auch der Verlauf des mindestens einen aktuellen Emissionswertes (40) und/oder der Verlauf des voraussichtlichen Emissionswertes (40) und/oder der Verlauf des zugeordneten Emissionsrechtes (42) angezeigt werden können.

14. Vorrichtung nach einem der Ansprüche 9 bis 13, mit einer Anzeige, bei der außer der Frühwarnung weitere technische Daten (46; 48) der zu überwachenden Anlage, insbesondere die mit der Anlage erzeugte Energiemenge angezeigt werden können.
